(19) Europäisches Patentamt / European Patent Office / Office européen des brevets

(11) **EP 4 234 739 A1**

(12) **EUROPEAN PATENT APPLICATION**
published in accordance with Art. 153(4) EPC

(43) Date of publication:
**30.08.2023 Bulletin 2023/35**

(21) Application number: **21882403.5**

(22) Date of filing: **21.07.2021**

(51) International Patent Classification (IPC):
**C22C 38/00** $^{(2006.01)}$    **C22C 38/58** $^{(2006.01)}$
**B23K 35/30** $^{(2006.01)}$

(52) Cooperative Patent Classification (CPC):
**B23K 35/30; C22C 38/00; C22C 38/58**

(86) International application number:
**PCT/JP2021/027339**

(87) International publication number:
**WO 2022/085262 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2020 JP 2020178407**

(71) Applicant: **NIPPON STEEL CORPORATION**
**Chiyoda-ku**
**Tokyo 100-8071 (JP)**

(72) Inventors:
• **TAKABE, Hideki**
  **Tokyo 100-8071 (JP)**
• **OKADA, Seiya**
  **Tokyo 100-8071 (JP)**
• **SAGARA, Masayuki**
  **Tokyo 100-8071 (JP)**
• **OGAWA, Kazuhiro**
  **Tokyo 100-0006 (JP)**

(74) Representative: **J A Kemp LLP**
**80 Turnmill Street**
**London EC1M 5QU (GB)**

(54) **TWO-PHASE STAINLESS STEEL WELDED JOINT**

(57)    A duplex stainless steel weld joint with good toughness and improved HISC resistance is provided. A duplex stainless steel weld joint (10) is a duplex stainless steel weld joint including a base material portion (11) and a weld portion (12), the weld portion (12) including a weld metal portion (121) and a weld heat-affected zone (122), the base material portion (11) and weld metal portion (121) having predetermined chemical compositions, the weld heat-affected zone (122) having a two-phase microstructure of ferrite and austenite, the volume ratio of ferrite phase being not higher than 70 %, the austenite-phase inter-part distance $\lambda$ being not larger than 60 pm.

Fig.1

EP 4 234 739 A1

**Description**

TECHNICAL FIELD

The present invention relates to a duplex stainless steel weld joint, and particularly to a duplex stainless steel weld joint with improved corrosion resistance.

BACKGROUND ART

For decades, duplex stainless steel has been used in a wide variety of technical fields, such as in steel pipes for heat exchangers, because of its strength and corrosion resistance, particularly sea-water corrosion resistance. A large number of compositions have already been proposed to provide duplex stainless steels with improved corrosion resistance, strength, machinability, etc.

For example, Patent Document 1 discloses a high-strength duplex stainless steel containing W in more than 1.5 mass % and not more than 5 mass %, where PREW [PREW = Cr+3.3 (Mo+0.5 W)+16N] is not lower than 40. It is assumed that, in this duplex stainless steel, the large amount of W dramatically improves corrosion resistance and that deterioration of mechanical properties and deterioration of corrosion resistance due to precipitation of intermetallic compounds (such as sigma phase) are insignificant.

Patent Document 2 discloses a duplex stainless steel having good pitting resistance and weldability, and particularly a duplex stainless steel where fine intermetallic compounds such as sigma phase are not produced even in weld heat-affected zones.

To improve pitting resistance, Patent Document 3 discloses including Sn such that N/Sn is in a specified range to facilitate formation of passivity film and increase that its stability, thereby significantly reducing that local corrosion.

To provide a welding material for welding high-corrosion-resistance / high-toughness duplex stainless steel, Patent Document 4 discloses that the Cr and Mo contents are to be limited, W included, the pitting resistance index PREW not lower than 42.0, and the ferrite capacity index Ph in the range of 0.25 to 0.35 to provide a welding material with good hot workability and good toughness and pitting resistance for the weld metal portion.

PRIOR ART DOCUMENTS

PATENT DOCUMENTS

Patent Document 1: JP Hei5(1993)-132741 A
Patent Document 2: WO 2005/001151 A1
Patent Document 3: JP 2013-253315 A
Patent Document 4: JP Hei8(1996)-260101 A

SUMMARY OF THE INVENTION

PROBLEMS TO BE SOLVED BY THE INVENTION

Today, various welded structures are widely used. When duplex stainless steel is used for welded structures such as pipes, heat exchangers, pumps used in a sea-water environment at high temperatures, one problem concerns the corrosion resistance, particularly pitting resistance, of welds. Patent Document 2 shows reducing fine sigma phase and/or nitride particles produced in heat-affected zones, which represent origins of pitting, by controlling the amounts of N and Mo in the steel and the density of coarse alumina-based inclusions.

On the other hand, in pipes for submarine oil wells and other facilities that require huge repair costs if pitting or the like occurs after installation, electric protection (i.e., cathodic protection) is employed as a precaution, where a potential is applied to welds and other locations that can easily experience pitting to prevent pitting. However, in duplex stainless steel weld joints, there is a risk that hydrogen generated during cathodic protection may cause cracking (HISC: Hydrogen-Induced Stress Cracking). Further, it is desirable that welded structures have good toughness. However, the above-mentioned prior art documents do not discuss HISC resistance.

A problem to be solved by the present invention is to provide a duplex stainless steel weld joint with good toughness and improved HISC resistance.

MEANS FOR SOLVING THE PROBLEMS

A duplex stainless steel weld joint according to embodiments of the present invention is a duplex stainless steel weld joint including a base material portion and a weld portion, the weld portion including a weld metal portion and a weld heat-affected zone, the base material portion having a chemical composition of, in mass %: up to 0.040 % C; up to 0.90 % Si; 0.20 to 1.50 % Mn; up to 0.040 % P; up to 0.010 % S; not less than 21.00 % and less than 31.00 % Cr; 4.00 to 8.00 % Ni; 0.50 to 4.00 % Mo; 0.03 to 0.20 % V; 0.05 to 0.50 % Co; above 0.100 % and up to 0.500 % N; up to 0.040 % Al; 0.0005 to 0.0040 % B; 0 to 4.00 % W; 0 to 4.00 % Cu; 0 to 0.100 % Sn; 0 to 0.200 % REM; 0 to 0.0040 % Ca; 0 to 0.0040 % Mg; 0 to 0.100 % Nb; 0 to 0.100 % Ti; 0 to 0.100 % Zr; and the balance Fe and impurities, the weld metal portion having a chemical composition in the same ranges as the chemical composition of the base material portion except for Ni, V, Co and B, the weld metal portion having, for Ni, V, Co and B, a chemical composition of, in mass %: 5.00 to 10.50 % Ni; 0 to 0.20 % V; 0 to 0.50 % Co; and 0 to 0.0040 % B, the weld heat-affected zone having a two-phase microstructure of ferrite and austenite, a volume ratio of ferrite phase being not higher than 70 %, an austenite-phase inter-part distance $\lambda$ being not larger than 60 pm. Here, the austenite-phase inter-part distance $\lambda$ in the weld heat-affected zone is measured in the following manner: a cross section perpendicular to a weld line is specified; a width direction is defined as a direction perpendicular to a thickness direction of the base material portion, and a height direction is defined as the thickness direction of the base material portion; a region adjacent to a fusion line is specified, the region being 84 pm in the width direction and 199.5 pm in the height direction; 20 straight lines are drawn in the width direction separated from one another by a distance of 10.5 pm, each line having a length of 84 pm; a line segment is extracted from the 20 straight lines, the line segment being on ferrite phase and connecting boundaries against austenite phase; a total length of the extracted line segment is divided by the number of the line segment to give an average distance in the width direction; 9 straight lines are drawn in the height direction separated from one another by a distance of 10.5 pm, each straight line having a length of 199.5 pm; a line segment is extracted from the 9 straight lines, the line segment being on ferrite phase and connecting boundaries against austenite phase, a total length of the extracted line segment is divided by the number of the line segment to give an average distance in the height direction; and an average of the average distance in the width direction and the average distance in the height direction is determined to give the austenite-phase inter-part distance $\lambda$.

EFFECTS OF THE INVENTION

The present invention provides a duplex stainless steel weld joint with good toughness and improved HISC resistance.

BRIEF DESCRIPTION OF THE DRAWINGS

[FIG. 1] FIG. 1 is a schematic cross-sectional view of an exemplary duplex stainless steel weld joint.
[FIG. 2A] FIG. 2A schematically illustrates a method of extracting a macroscopic test piece for microstructure observation.
[FIG. 2B] FIG. 2B is a schematic cross-sectional view illustrating locations for extracting microscopic test pieces for microstructure observation.
[FIG. 3A] FIG. 3A illustrates a method of measuring the austenite-phase inter-part distance $\lambda$.
[FIG. 3B] FIG. 3B illustrates the method of measuring the austenite-phase inter-part distance $\lambda$.
[FIG. 4] FIG. 4 is a schematic cross-sectional view illustrating a location for extracting a Charpy impact test piece.
[FIG. 5A] FIG. 5A is a plan view of a sample steel plate.
[FIG. 5B] FIG. 5B is a front view of the sample steel plate.
[FIG. 6A] FIG. 6A is a schematic cross-sectional view illustrating a location for extracting a corrosion test piece.
[FIG. 6B] FIG. 6B is a front view of the corrosion test piece.
[FIG. 6C] FIG. 6C is a cross-sectional view of the corrosion test piece taken on line C-C in FIG. 6B.
[FIG. 6D] FIG. 6D is an enlarged view of the V-notch of the corrosion test piece.

EMBODIMENTS FOR CARRYING OUT THE INVENTION

The present inventors investigated cracking due to cathodic protection, and obtained the following findings.
Cracking due to cathodic protection is caused by hydrogen generated during application of a potential diffusing within the steel and diffusing/accumulating in ferrite phase. To prevent such cracking, the potential applied must be controlled within an appropriate range to reduce the amount of entering hydrogen, while appropriately disposing ferrite phase and austenite phase that form the metal microstructure of the weld portions (i.e., weld heat-affected zone and weld metal portion) of the duplex stainless steel to ensure that the amount of hydrogen accumulating in ferrite phase is smaller than an amount that would cause cracking.

The base material of the duplex stainless steel has a metal microstructure with austenite phase and ferrite phase in a proportion around 1:1, where islands of austenite phase elongated in the direction of rolling, formed by the heat treatment during manufacturing, are present within ferrite phase. On the other hand, in an equilibrium diagram, a single phase of ferrite is the equilibrium phase in a high-temperature range directly below the melting point, and thus austenite phase disappears when the maximum heating temperature has been reached in portions that are heated to close to the melting point, such as heat-affected zones (hereinafter sometimes referred to as "HAZs") near a fusion line (representing the border between a melted portion and an unmelted portion of the base material, also referred to as bond or melting border), such that ferrite phase accounts to close to 100 %. During the cooling process of the weld thermal cycle, austenite phase precipitates from the grain boundaries against ferrite phase to form a two-phase microstructure, which is, however, a different microstructure from that of the base material both in terms of phase proportion and geometry.

To increase the resistance against cracking due to cathodic protection, the first requirement is to reduce the volume ratio of ferrite phase, which is susceptible to hydrogen cracking. However, merely reducing the volume ratio of ferrite phase is insufficient in the HAZs, which have a significantly different phase distribution geometry from that of the base material.

To reduce HISC in the HAZs, not only the volume ratio of ferrite phase must be reduced, but also the austenite-phase inter-part distance $\lambda$. The hydrogen that has entered during cathodic protection diffuses/accumulates in portions of each phase that have high stresses; particularly, cracking occurs when accumulation in ferrite phase exceeds a limit. On the other hand, in a microstructure where hydrogen moves between ferrite phase and austenite phase in a sufficiently short period of time, the hydrogen that has entered flows into austenite phase, thereby reducing accumulation in ferrite phase to and below a limit, thus preventing cracking.

The diffusion flow rate of hydrogen between ferrite phase and austenite phase, $J_p$, relative to the austenite-phase inter-part distance $\lambda$, can be represented by the following expression:

$$J_p = D_H \Delta a / \lambda$$

Here, $D_H$ is the diffusion coefficient of hydrogen, and $\Delta a$ is the difference in hydrogen activity between the two phases.

If $J_p \geq J_{pcr}$ is satisfied, accumulation of hydrogen in ferrite phase is reduced to or below a limit, thus preventing cracking. The austenite-phase inter-part distance $\lambda$ is defined as the average distance between parts of a phase, which means the average free path of hydrogen during hydrogen diffusion in the microstructure; the smaller this value, the more easily hydrogen can be absorbed by austenite phase. The threshold for the diffusion flow rate of hydrogen, $J_{pcr}$, depends on the potential for cathodic protection.

To reduce the austenite-phase inter-part distance $\lambda$, it is effective to use N, which can move very rapidly inside metal (i.e., has a high diffusion rate), to promote production of austenite phase during the cooling process in the weld thermal cycle. The use of N enables formation of austenite phase that has sufficiently grown from austenite phase along the grain boundaries into the grains in a branching manner (i.e., in the Widmanstatten pattern).

Further, to further reduce the austenite-phase inter-part distance $\lambda$, it is effective if the appropriate amounts of V and Co are present in combination. Thus, fine particles of composition phases mainly composed of Cr-V-Co are produced within the grains in the HAZs, which form nuclei for austenite phase that precipitates from within the grains, thereby promoting precipitation of austenite phase within the grains.

Further, the geometry of the microstructure of HAZs is strongly affected by the welding conditions. To reduce the austenite-phase inter-part distance $\lambda$, the cooling time $\Delta t$ for 1000 to 700°C in the weld thermal cycle must be within a predetermined range.

The duplex stainless steel weld joint according to the present invention was made based on these findings. Now, the duplex stainless steel weld joint according to embodiments that of the present invention will be described in detail.

[Duplex Stainless Steel Weld Joint]

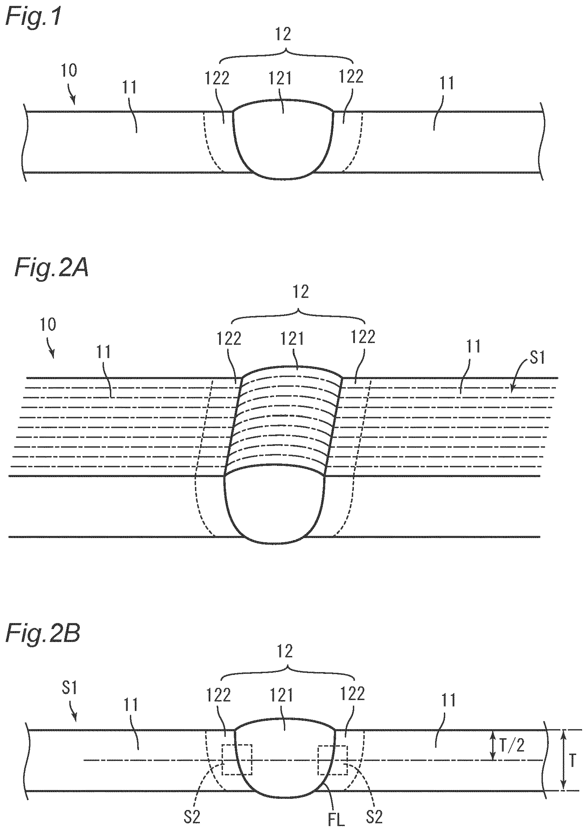

FIG. 1 is a schematic cross-sectional view of a weld joint 10, which is an exemplary duplex stainless steel weld joint according to the present embodiments. The weld joint 10 includes base material portions 11 and a weld portion 12. The weld portion 12 is composed of a weld metal portion 121 and weld heat-affected zones 122. The weld joint 10 may be created by welding steel pipes, or by welding steel plates.

As used herein, "base material portion" means a portion of the base material that has been hardly affected by welding and has substantially the same microstructure as the base material before welding. "Weld heat-affected zone" means a portion of the base material that has substantially the same chemical composition as the base material portion but has been heated to a temperature below the melting point during welding so as to have a different microstructure from that of the base material portions. "Weld metal portion" means a portion of the base material and/or welding material (e.g., welding wire) that has melted and solidified during welding. The weld metal portion generally has a different chemical composition and microstructure from that of the base material portions.

[Chemical Composition]

First, the chemical composition of the duplex stainless steel forming the duplex stainless steel weld joint according to the present embodiments (hereinafter sometimes simply referred to as "duplex stainless steel" or "steel") will be described. In the following description, "%" for the content of each element means "mass %".

C: up to 0.040 % (base material portion and weld metal portion)

Carbon (C) is an element effective in stabilizing austenite phase. However, if the content thereof exceeds 0.040 %, carbides can easily precipitate, which deteriorates corrosion resistance. In view of this, C content is to be not higher than 0.040 %. An upper limit for C content is preferably 0.030 %, and more preferably 0.025 %. While the above-mentioned effect is produced even if the content is at an impurity level, a content not lower than 0.005 % is particularly preferable.

Si: up to 0.90 % (base material portion and weld metal portion)

Silicon (Si) is effective in deoxidizing steel; however, an excessively high content thereof promotes production of intermetallic compounds (e.g., sigma phase). In view of this, Si content is to be not higher than 0.90 %. An upper limit for Si content is preferably 0.80 %, and more preferably 0.60 %. While the above-mentioned effect is produced even if the content is at an impurity level, a content not lower than 0.05 % is particularly preferable.

Mn: 0.20 to 1.50 % (base material portion and weld metal portion)

Manganese (Mn) has the effects of desulfurizing and deoxidizing duplex stainless steel during smelting, which improves hot workability. Further, it increases the solid solubility of N to reduce precipitation of nitrides in the weld portion. However, an excessively high content thereof deteriorates corrosion resistance. In view of this, Mn content is to be 0.20 to 1.50 %. An upper limit for Mn content is preferably 0.70 %. A lower limit for Mn content is preferably 0.30 %, and more preferably 0.40 %.

P: up to 0.040 % (base material portion and weld metal portion)

P (phosphorus) is an impurity element that inevitably enters steel, and a content thereof exceeding 0.040 % significantly deteriorates corrosion resistance and toughness. In view of this, P content is to be not higher than 0.040 %. P content is preferably not higher than 0.030 %, and more preferably not higher than 0.025 %.

S: up to 0.010 % (base material and weld metal portion)

Sulfur (S), too, is an impurity element that inevitably enters steel, and deteriorates the hot workability of the steel. Further, sulfides provide initiation points of pitting, which deteriorates pitting resistance. In view of this, S content is to be not higher than 0.010 %. S content is preferably not higher than 0.005 %, and more preferably not higher than 0.002 %.

Cr: not lower than 21.00 % and lower than 31.00 % (base material portion and weld metal portion)

Chromium (Cr) is a basic ingredient that is effective in maintaining corrosion resistance. If Cr content is lower than 21.00 %, it results in insufficient pitting resistance. On the other hand, if Cr content is not lower than 31.00 %, it results in significant precipitation of intermetallic compounds (e.g., sigma phase), which decreases hot workability and deteriorates weldability. In view of this, Cr content is to be not lower than 21.00 % and lower than 31.00. A lower limit for Cr content is preferably 23.00 %, and more preferably 24.00 %. An upper limit for Cr content is preferably 29.00 %, and more preferably 28.00 %.

Ni: 4.00 to 8.00 % (base material portion)

Nickel (Ni) is an essential ingredient to stabilize austenite phase; however, a content thereof exceeding 8.00 % causes a decrease in the amount of ferrite, which makes it difficult to ensure that the basic properties of duplex stainless steel are present. Further, during multi-layer welding, transition through the temperature region for precipitation of sigma phase occurs a plurality of times such that sigma phase or the like can easily precipitate in the HAZs. On the other hand, an Ni content lower than 4.00 % results in an excessively large amount of ferrite such that, again, features of duplex stainless steel are lost. Further, the solid solubility of N in ferrite is low and thus nitrides precipitate, deteriorating corrosion resistance. In view of this, the Ni content in the base material portion is to be 4.00 to 8.00 %. A lower limit for the Ni content in the base material portion is preferably 4.50 %, and more preferably 4.80 %. An upper limit for the Ni content in the base material portion is preferably 7.80 %, more preferably 7.50 %, yet more preferably 7.00 %, still more preferably 6.00 %, and yet more preferably 5.50 %.

Ni: 5.00 to 10.50 (weld metal portion)

In the weld metal portion, the distribution geometry of the phases cannot be controlled by hot working or thermal treatment, as is the case with the base material portion; as such, the lower limit for Ni is to be higher than that for the base material portion to ensure that there is a certain volume ratio of austenite phase and, at the same time, satisfy the austenite-phase inter-part distance $\lambda \leq 60$ pm. On the other hand, in the weld metal portion, solidified structures are not affected by hot working or thermal treatment, such that elements that promote sigma-phase precipitation, such as Cr and Mo, are not distributed (i.e., concentrated) in ferrite phase. Thus, sigma phase does not easily precipitate even with a higher Ni content than in the base material portion. However, if Ni content exceeds 10.50 %, sigma phase or the like can easily precipitate such that features of duplex stainless steel are lost. In view of this, the Ni content in the weld metal portion is to be 5.00 to 10.50 %. A lower limit for the Ni content in the weld metal portion is preferably 6.00 %, more preferably 7.00 %, and yet more preferably 8.00 %. An upper limit for the Ni content in the weld metal portion is preferably 10.00 %, and more preferably 9.50 %.

Mo: 0.50 to 4.00 % (base material portion and weld metal portion)

Molybdenum (Mo), as is the case with Cr, is a very effective ingredient in improving corrosion resistance. Particularly, to increase pitting resistance and crevice corrosion resistance, the content thereof must be not lower than 0.50 %. On the other hand, an excessively high Mo content causes embrittlement of material during manufacturing and, similar to Cr, has a strong effect of facilitating precipitation of intermetallic compounds. In view of this, Mo content is to be 0.50 to 4.00 %. A lower limit for Mo content is preferably 0.80 %, more preferably 1.00 %, yet more preferably 1.50 %, and still more preferably 2.00 %. An upper limit for Mo content is preferably 3.50 %, and more preferably 3.00 %.

V: 0.03 to 0.20 % (base material portion)

Vanadium (V), when contained in steel in an appropriate amount together with Co, causes fine particles of compound phases mainly composed of Cr-V-Co to be produced in the HAZ grains, which provide nuclei for austenite phase precipitating from inside the grains, thereby promoting precipitation of austenite phase within the grains. As a result, V reduces the austenite-phase inter-part distance $\lambda$ in the HAZs, thereby contributing to prevention of hydrogen accumulation in ferrite phase in the HAZs. However, these compound phases, when they grow, adversely affect toughness; as such, a high V content has adverse effects. In view of this, the V content in the base material portion is to be 0.03 to 0.20 %. A lower limit for the V content in the base material portion is preferably 0.04 %. An upper limit for the V content in the base material portion is preferably 0.15 %, and more preferably 0.10 %.

V: 0 to 0.20 % (weld metal portion)

In the weld metal portion, V is an optional element and need not be contained. V contained in the weld metal portion has similar effects to those for the base material portion. On the other hand, in the weld metal portion, microstructure can also be controlled by welding by means of a welding material having a higher Ni content than the base material or welding by means of a shielding gas containing N$_2$, as discussed further below. Thus, it is not essential that V be contained in the weld metal portion; in view of this, V content is to be 0 to 0.20 %. A lower limit for the V content in the weld metal portion is preferably 0.03 %, and more preferably 0.04 %. An upper limit for the V content in the weld metal portion is preferably 0.15 %, and more preferably 0.10 %.

Co: 0.05 to 0.50 % (base material portion)

Cobalt (Co), when contained in steel in an appropriate amount together with V, causes fine particles of compound phases mainly composed of Cr-V-Co to be produced in the HAZ grains, as discussed above, which provide nuclei for austenite phase precipitating from inside the grains, thereby promoting precipitation of austenite phase within the grains. As a result, Co reduces the austenite-phase inter-part distance $\lambda$ in the HAZs, thereby contributing to prevention of hydrogen accumulation in ferrite phase in the HAZs. However, an excessively high Co content decreases the toughness of the steel. In view of this, the Co content in the base material portion is to be 0.05 to 0.50 %. A lower limit for the Co content in the base material portion is preferably 0.10 %, more preferably 0.15 %, and yet more preferably 0.20 %. An upper limit for the Co content in the base material portion is preferably 0.40 %, more preferably 0.35 %, and yet more preferably 0.30 %.

Co: 0 to 0.50 % (weld metal portion)

In the weld metal portion, Co is an optional element and need not be contained. Co contained in the weld metal portion has effects similar to those for the base material portion. On the other hand, in the weld metal portion, the microstructure can also be controlled by welding by means of a welding material having a higher Ni content than the base material or welding by means of a shielding gas containing $N_2$, as discussed further below. Thus, it is not essential that Co be contained in the weld metal portion; in view of this, Co content is to be 0 to 0.50 %. A lower limit for the Co content in the weld metal portion is preferably 0.05 %, more preferably 0.10 %, yet more preferably 0.15 %, and still more preferably 0.20 %. An upper limit for the Co content in the weld metal portion is preferably 0.40 %, more preferably 0.35 %, and yet more preferably 0.30 %.

N: above 0.100 % and up to 0.500 % (base material portion and weld metal portion)

Nitrogen (N) is a powerful austenite-forming element and is effective in improving the thermal stability and corrosion resistance of duplex stainless steel. In the steel according to the present embodiments, which contains large amounts of Cr and Mo i.e. ferrite-forming elements, an N content exceeding 0.100 % is required to achieve the appropriate balance between the two phases, i.e., ferrite and austenite. Further, N contributes to improvements in the pitting resistance index PREW to improve the corrosion resistance of the steel, as is the case with Cr and Mo. However, in the steel according to the present embodiments, an N content exceeding 0.500 % causes blowhole-induced defects or production of nitrides due to the heat during welding, for example, thus deteriorating the toughness and/or corrosion resistance of the steel. In view of this, N content is to be higher than 0.100 % and not higher than 0.500 %. A lower limit for N content is preferably 0.150 %, and more preferably 0.200 %. An upper limit for N content is preferably 0.450 %, more preferably 0.400 %, and yet more preferably 0.350 %.

Al: up to 0.040 % (base material portion and weld metal portion)

Aluminum (Al) is effective as a deoxidizing agent for steel; however, if the amount of N in the steel is high, Al precipitates in the form of AlN (aluminum nitride), which deteriorates toughness and corrosion resistance. Further, Al forms oxides, which provide sigma-phase nucleation sites. In view of this, Al content is to be not higher than 0.040 %. According to the present embodiments, containing large amounts of Si in the steel is avoided and thus Al is typically used as a deoxidizing agent; however, if vacuum dissolution is to be performed, Al need not necessarily be contained. An upper limit for A1 content is preferably 0.030 %, and more preferably 0.020 %. The lower the Al content, the better; however, an excessively low Al content leads to increased manufacturing costs. A lower limit for Al content is preferably 0.001 %, and more preferably 0.005 %. As used herein, Al content means the content of "acid-soluble Al", i.e., sol. Al.

B: 0.0005 to 0.0040 % (base material portion)

Boron (B) increases the hot workability of steel. For example, producing a seamless steel pipe by skewed rolling requires high hot workability. On the other hand, a B content that exceeds 0.0040 % increases oxides, sulfides and intermetallic compounds in the steel. Oxides, sulfides and intermetallic compounds provide origins of pitting, which decreases the corrosion resistance of the steel. In view of this, the B content in the base material portion is to be 0.0005 to 0.0040 %. A lower limit for the B content in the base material portion is preferably 0.0010 %, and more preferably 0.0015 %. An upper limit for the B content in the base material portion is preferably 0.0030 %, and more preferably 0.0025 %.

B: 0 to 0.0040 % (weld metal portion)

In the weld metal portion, B is an optional element and need not be contained. This is because the welding material is not required to have as high hot workability as the base material portion. In view of this, it is not essential that B be contained in the weld metal portion, and B content is to be 0 to 0.0040 %. A lower limit for the B content in the weld metal portion is preferably 0.0005 %, more preferably 0.0010 %, and more preferably 0.0015 %. An upper limit for the B content in the weld metal portion is preferably 0.0030 %, and more preferably 0.0025 %.

W: 0 to 4.00 % (base material portion and weld metal portion)

Tungsten (W) is an optional element and need not be contained in the steel. As is the case with Mo, W is an element that improves corrosion resistance, particularly the resistance to pitting and crevice corrosion, and forms stable oxides so as to be effective in improving corrosion resistance in an environment with low pH. This effect is produced even if a small amount of W is contained. On the other hand, if the W content exceeds 4.00 %, it does not result in an increase in the effect that would be worth it, and just means increased costs. In view of this, W content is to be 0 to 4.00 %. A lower limit for W content is preferably 0.50 %, more preferably 1.00 %, and more preferably 1.50 %. An upper limit for W content is preferably 3.50 %, more preferably 3.00 %, and yet more preferably 2.50 %.

Cu: 0 to 4.00 % (base material portion and weld metal portion)

Copper (Cu) is an optional element and need not be contained in the steel. Cu is a particularly effective element in improving oxidation resistance in a reductive, low-pH environment, e.g. $H_2SO_4$ or hydrogen sulfide environment. This effect is produced even if a small amount of Cu is contained. However, an excessively high Cu content deteriorates hot workability. In view of this, Cu content is to be 0 to 4.00 %. A lower limit for Cu content is preferably 0.20 %, more preferably 0.50 %, yet more preferably 1.00 %, and still more preferably 1.20 %. An upper limit for Cu content is preferably 3.00 %, more preferably 2.50 %, and yet more preferably 2.00 %.

Sn: 0 to 0.100 % (base material portion and weld metal portion)

Tin (Sn) is an optional element and need not be contained in the steel. Sn has the effect of improving corrosion resistance. This effect is produced even if a small amount of Sn is contained. However, an excessively high content thereof decreases hot workability. In view of this, Sn content is to be 0 to 0.100 %. A lower limit for Sn content is preferably 0.001 %, and more preferably 0.002 %. An upper limit for Sn content is preferably 0.050 %, and more preferably 0.020 %.

REM: 0 to 0.200 % (base material portion and weld metal portion)

Rare earth metals (REMs) are optional elements and need not be contained in the steel. REMs are effective elements in improving hot workability. This effect is produced even if a small amount of REM is contained. However, an excessively high content increases non-metallic inclusions such as oxides or sulfides, providing nucleation sites for sigma-phase precipitation or providing origins of pitting, which deteriorates corrosion resistance. In view of this, REM content is to be 0 to 0.200 %. A lower limit for REM content is preferably 0.001 %, more preferably 0.010 %, and yet more preferably 0.020 %. An upper limit for REM content is preferably 0.100 %, and more preferably 0.080 %. As used herein, "REM" is a generic term for a total of 17 elements, i.e., Sc, Y and the lanthanoids, and "REM content" means the total amount of those elements.

Ca: 0 to 0.0040 % (base material portion and weld metal portion)

Calcium (Ca) is an optional element and need not be contained in the steel. As is the case with B, Ca increases the hot workability of the steel. This effect is produced even if a small amount of Ca is contained. On the other hand, an excessively high Ca content increases non-metallic inclusions in the steel, such as oxides or sulfides. These non-metallic inclusions provide origins of pitting, which deteriorates the corrosion resistance of the steel. In view of this, Ca content is to be 0 to 0.0040 %. A lower limit for Ca content is preferably 0.0005 %, and more preferably 0.0010 %. An upper limit for Ca content is preferably 0.0035 %, and more preferably 0.0030 %.

Mg: 0 to 0.0040 % (base material portion and weld metal portion)

Magnesium (Mg) is an optional element and need not be contained in the steel. As is the case with B, Mg increases the hot workability of the steel. This effect is produced even if a small amount of Mg is contained. On the other hand, an excessively high Mg content increases non-metallic inclusions in the steel, such as oxides or sulfides. These non-metallic inclusions provide origins of pitting, which decreases the corrosion resistance of the steel. In view of this, the Mg content is to be 0 to 0.0040 %. A lower limit for Mg content is preferably 0.0005 %, and more preferably 0.0010 %. An upper limit for Mg content is preferably 0.0035 %, and more preferably 0.0030 %.

Nb: 0 to 0.100 % (base material portion and weld metal portion)

Niobium (Nb) is an optional element and need not be contained in the steel. Nb forms carbonitrides, increasing the strength of the steel. This effect is produced even if a small amount of Nb is contained. On the other hand, an excessively high Nb content decreases the toughness of the steel. In view of this, Nb content is to be 0 to 0.100 %. A lower limit for Nb content is preferably 0.001 %, more preferably 0.005 %, and yet more preferably 0.010 %. An upper limit for Nb content is preferably 0.090 %, and more preferably 0.080 %.

Ti: 0 to 0.100 % (base material portion and weld metal portion)

Titanium (Ti) is an optional element and need not be contained in the steel. Ti forms carbonitrides, increasing the strength of the steel. This effect is produced even if a small amount of Ti is contained. On the other hand, an excessively high Ti content decreases the toughness of the steel.
In view of this, Ti content is to be 0 to 0.100 %. A lower limit for Ti content is preferably 0.001 %, more preferably 0.005 %, and yet more preferably 0.010 %. An upper limit for Ti content is preferably 0.090 %, and more preferably 0.080 %.

Zr: 0 to 0.100 % (base material portion and weld metal portion)

Zirconium (Zr) is an optional element and need not be contained in the steel. Zr forms carbonitrides, increasing the strength of the steel. This effect is produced even if a small amount of Zr is contained. On the other hand, an excessively high Zr content decreases the toughness of the steel. In view of this, Zr content is to be 0 to 0.100 %. A lower limit for Zr content is preferably 0.001 %, more preferably 0.005 %, and yet more preferably 0.010 %. An upper limit for Zr content is preferably 0.090 %, and more preferably 0.080 %.
The balance of the chemical composition of the duplex stainless steel (i.e., base material portion and weld metal portion) is Fe and impurities. Impurity as used here means an element originating from ore or scrap used as raw material for steel being manufactured on an industrial basis or an element that has entered from the environment or the like during the manufacturing process.

[Microstructure]

The duplex stainless steel weld joint according to the present embodiments includes a weld heat-affected zone with a two-phase microstructure of ferrite and austenite, where the volume ratio of ferrite phase is not higher than 70 %. Further, the austenite-phase inter-part distance $\lambda$ in the microstructure of the weld heat-affected zone is not larger than 60 pm.
The volume ratio of ferrite phase and the austenite-phase inter-part distance $\lambda$ in the microstructure of the weld heat-affected zone of the duplex stainless steel weld joint are measured in the following manner.
As shown in FIG. 2A, a weld joint 10 is cut perpendicularly to the weld line in such a manner that 10 macroscopic test pieces S1 are taken, each having an observation surface constituted by a cut surface perpendicular to the weld line. Two microscopic test pieces S2 are taken from each of the 10 macroscopic test pieces S1, as shown in FIG. 2B. That is, 20 microscopic test pieces S2 are taken from one weld joint 10. The microscopic test pieces S2 are taken from both sides of the weld metal portion 121 in such a manner that the center of each microscopic test piece S2 contains, at the position of 1/2 of the thickness T of the base material portion 11, the fusion line FL.
The measurement of the volume ratio of ferrite phase is performed for all of the 20 microscopic test pieces S2. The observation surface (i.e., cut surface perpendicular to the weld line) is mirror polished and, thereafter, electrolyte etched in a 10 mass % oxalic acid solution. The etched surface is observed by optical microscopy at a magnification of 400 times, where the area ratio of ferrite phase is determined by the point-count method in accordance with ASTM E562:2019 for an area adjacent to the fusion line FL having a dimension of 84 pm in the width direction (i.e., direction perpendicular to the thickness direction of the base material portion 11; the same applies hereinafter) and 199.5 pm in the height direction (i.e., thickness direction of the base material portion 11; the same applies hereinafter). The average of the area ratios of ferrite phase obtained from the 20 microscopic test pieces S2 is treated as the volume ratio of ferrite phase in the microstructure of the weld heat-affected zone of the duplex stainless steel weld joint.
The austenite-phase inter-part distance $\lambda$ is measured based on all of the 20 microscopic test pieces S2. For each microscopic test piece S2, the observation surface (i.e., cut surface perpendicular to the weld line) is mirror polished and, thereafter, electron backscatter diffraction (EBSD) analysis, at a magnification of 500 times, is conducted on an area adjacent to the fusion line FL having a size of 84 pm in the width direction and 199.5 pm in the height direction, thus producing a distribution diagram for the ferrite ($\alpha$) and austenite (y) phases.

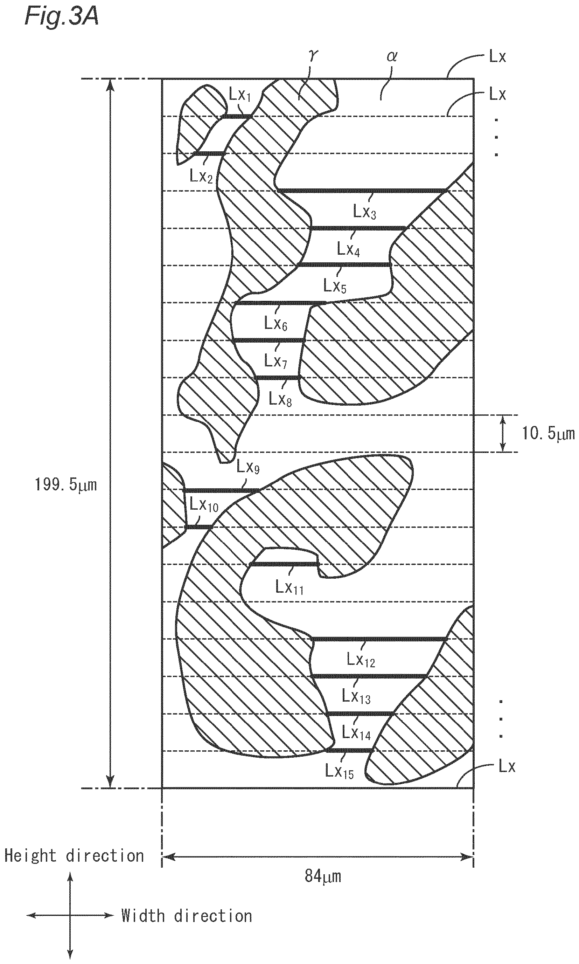

As shown in FIG. 3A, on the distribution diagram, 20 straight lines Lx are drawn in the width direction separated from one another by a distance of 10.5 pm, each having a length of 84 pm. From these straight lines, line segments $Lx_1$, $Lx_2$, ..., $Lx_{nx}$ (nx indicates the number of these line segments; in the implementation shown in FIG. 3A, nx=15) are extracted, each line segment being on ferrite phase ($\alpha$) and connecting boundaries against austenite phase (y). The total length of the extracted line segments $Lx_1$, $Lx_2$, ..., $Lx_{nx}$ is divided by the number of line segments nx to give the average distance in the width direction.

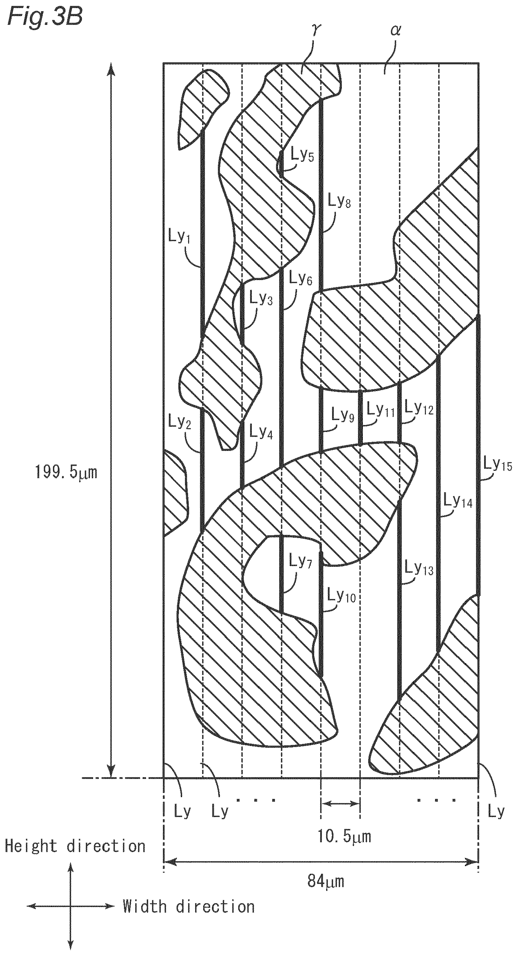

As shown in FIG. 3B, on the distribution diagram, 9 straight lines Ly are drawn in the height direction separated from one another by a distance of 10.5 pm, each having a length of 199.5 pm. From these straight lines, line segments $L_{y1}$, $Ly_2$, ..., $Ly_{ny}$ (ny indicates the number of these line segments; in the implementation shown in FIG. 3B, ny=15) are extracted, each line segment being on ferrite phase ($\alpha$) and connecting boundaries against austenite phase (y). The total length of the extracted line segments $Ly_1$, $Ly_2$, ..., $Ly_{ny}$ is divided by the number of line segments ny to give the average distance in the height direction.

The average of the average distance in the width direction and the average distance in the height direction is determined to give the austenite-phase inter-part distance $\lambda$ for the particular microscopic test piece S2; then, the average of the austenite-phase inter-part distance $\lambda$ for the 20 microscopic test pieces S2 is determined to give the austenite-phase inter-part distance $\lambda$ for the weld joint 10.

A weld heat-affected zone in which the volume ratio of ferrite phase in the microstructure is not higher than 70 % and the austenite-phase inter-part distance $\lambda$ is not larger than 60 pm provides good toughness and HISC resistance. An upper limit for the volume ratio of ferrite phase in the microstructure of the weld heat-affected zone is preferably 65 %, and more preferably 60 %. A lower limit for the volume ratio of ferrite phase in the microstructure of the weld heat-affected zone, while not limited to any particular value, may be 30 %, for example.

The microstructure of the weld metal portion is preferably a microstructure providing a HISC resistance generally equal to or higher than that of the weld heat-affected zone. That is, it is preferable that, in the microstructure of the weld metal portion, the volume ratio of ferrite phase is not higher than 70 % and the austenite-phase inter-part distance $\lambda$ is not larger than 60 pm. The volume ratio of ferrite phase and the austenite-phase inter-part distance $\lambda$ in the microstructure of the weld metal portion may be measured by taking a sample from a portion near the center of the weld metal portion and then following generally the same procedure by which the microstructure of the weld heat-affected zone is measured.

Although not limiting, the volume ratio of ferrite phase in the microstructure of the base material portion is 30 to 70 %, for example. The volume ratio of ferrite phase in the microstructure of the base material portion and the austenite-phase inter-part distance $\lambda$ may be measured by taking a sample from a portion near the center of the base material portion and following generally the same procedure by which the microstructure of the weld heat-affected zone is measured.

[Mechanical Properties]

In the duplex stainless steel weld joint according to the present embodiments, the yield strength of the base material portion is preferably not lower than 450 MPa. The yield strength of the base material portion is more preferably not lower than 500 MPa, yet more preferably not lower than 550 MPa, and still more preferably not lower than 600 MPa. While no particular upper limit for the yield strength of the base material portion is specified, an example may be 690 MPa.

In the duplex stainless steel weld joint according to the present embodiments, the weld heat-affected zone preferably provides an amount of absorbed energy not smaller than 30 J as measured by Charpy impact testing at -30°C. The Charpy impact testing is conducted in accordance with JIS Z2242:2018.

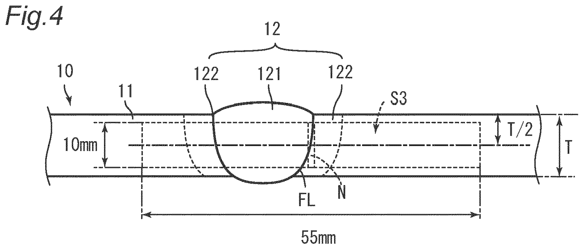

The Charpy impact test piece used is a full-sized V-notch test piece with a width of 10 mm, a thickness of 10 mm, a length of 55 mm and a notch depth of 2 mm. As shown in FIG. 4, a Charpy impact test piece S3 is taken in such a manner that the center of the notch N is in contact with the fusion line FL at the position of 1/2 of the thickness T of the base material portion 11. If a full-sized test piece cannot be taken, testing may be conducted on a sub-sized test piece, followed by conversion to determine the amount of absorbed energy. The conversion follows Table A.5 of API Specification 5CRA.

[Manufacturing Method]

Now, a method of manufacturing the duplex stainless steel weld joint according to the present embodiments will be described. The manufacturing method described below is illustrative, and does not limit the method of manufacturing the duplex stainless steel weld joint according to the present embodiments.

[Method of Manufacturing Base Material]

First, a duplex stainless steel having such a chemical composition for the base material portion as described above is smelted. The duplex stainless steel may be smelted by an electric furnace, or may be smelted by an $Ar-O_2$ mixed-gas bottom-blown decarburizing furnace (i.e., AOD furnace). Alternatively, the duplex stainless steel may be smelted by a vacuum decarburizing furnace (i.e., VOD furnace). From the smelted duplex stainless steel, ingot-making may be performed to produce an ingot, or continuous casting may be performed to produce a slab, a bloom or a billet.

The resulting ingot, slab, bloom or billet is used to produce a duplex stainless steel material. The duplex stainless steel material may be, for example, a duplex stainless steel plate or a duplex stainless steel pipe.

The duplex stainless steel plate may be produced by, for example, hot working the ingot or slab. The hot working may be hot forging or hot rolling, for example.

The duplex stainless steel pipe may be a seamless steel pipe, or may be a welded steel pipe. A seamless steel pipe may be produced by, for example, producing a billet by hot working an ingot, slab or bloom, or producing a billet by continuous casting, and then hot working the billet. The hot working of the billet may be, for example, piercing-rolling by a Mannesmann process, or hot extrusion, hot forging or hot rolling. A welded steel pipe may be produced by, for example, bending a duplex stainless steel plate as described above into an open pipe and, thereafter, welding both edges, extending in the longitudinal direction, of the open pipe by a well-known welding method, such as submerged-arc welding.

In the hot working process according to the present embodiments, the processing time is preferably not longer than 15 minutes. The processing time (min) means the time from the point at which the material is extracted from the heating furnace to the completion of the final hot working step. A processing time that is too long leads to ferrite coarsening, and a decrease in toughness may result. In view of this, according to the present embodiments, the processing time is preferably not longer than 15 minutes. An upper limit for processing time is more preferably 14 minutes, and yet more preferably 13 minutes. While no specific lower limit for processing time is specified, an example may be 5 minutes.

The duplex stainless steel material thus produced is subjected to solution heat treatment. Specifically, the duplex stainless steel material is loaded into a heat treatment furnace and is subjected to heat treatment at a predetermined solution heat treatment temperature. Although not limiting, the solution heat treatment temperature is 900 to 1200 °C, for example. Generally, the higher the solution heat treatment temperature, the higher the volume ratio of ferrite phase. After the heat treatment at the solution heat treatment temperature, the duplex stainless steel material is rapidly cooled by water cooling, for example.

[Method of Manufacturing Weld Joint]

Members made of the base material are welded to produce a weld joint. The weld joint may be produced from steel pipes, or may be produced from steel plates.

The welding material used is such that the chemical composition of the resulting weld metal portion is within the above-specified ranges. The welding material used preferably has an Ni content higher than that of the base material by 1.0 to 4.0 mass %, and more preferably higher by 2.0 to 4.0 mass %. Further, as necessary, the shielding gas used may contain 2.0 to 5.0 volume % $N_2$. The use of a welding material with high Ni content and/or a shielding gas containing $N_2$ makes it easier to ensure the HISC resistance of the weld metal portion.

To control the microstructure of the weld heat-affected zone, it is important to limit its chemical composition and, in addition, to control the welding conditions. Specifically, to ensure that the austenite-phase inter-part distance $\lambda$ in the weld heat-affected zone is not higher than 60 pm, the cooling time $\Delta t$ in the range of 1000 to 700°C in the weld thermal cycle must be 8 to 50 seconds. Control of the time $\Delta t$ can be achieved by controlling the welding heat input depending on the shape and/or size (particularly thickness) of the weld joint. A time $\Delta t$ that is too short results in an insufficient nucleation for austenite phase from within the grains. A time $\Delta t$ that is too long causes precipitation of sigma phase, leading to a decrease in toughness.

A duplex stainless steel weld joint according to embodiments of the present invention has been described. According to the present embodiments, a duplex stainless steel weld joint can be obtained that has good toughness and that can reduce HISC during cathodic protection. The duplex stainless steel weld joint according to the present embodiments is particularly suitable as a weld joint for steel pipe for linepipe. Also, the duplex stainless steel weld joint according to the present embodiments is particularly suitable as a weld joint for seamless steel pipe for linepipe.

EXAMPLES

Now, the present invention will be described more specifically with reference to examples. The present invention is not limited to these examples.

Duplex stainless steels for base material having the chemical compositions shown in Table 1 and a duplex stainless steel for welding material having the chemical composition shown in Table 2 were melted in a laboratory-scale electric furnace.

[Table 1]

TABLE 1

| Steel Desig. | Chemical com position (in mass %, balance Fe and impurities) | | | | | | | | | | | | | |
|---|---|---|---|---|---|---|---|---|---|---|---|---|---|---|
| | C | Si | Mn | P | S | Cr | Ni | Mo | V | Co | N | Al | B | Others |
| A | 0.019 | 0.16 | 0.50 | 0.021 | 0.001 | 22.04 | 4.96 | 3.00 | 0.04 | 0.20 | 0.201 | 0.010 | 0.0024 | - |
| B | 0.020 | 0.17 | 0.50 | 0.022 | 0.001 | 22.06 | 4.02 | 2.98 | 0.04 | 0.18 | 0.187 | 0.009 | 0.0020 | - |
| C | 0.020 | 0.14 | 0.46 | 0.022 | 0.002 | 24.96 | 6.90 | 3.10 | 0.17 | 0.31 | 0.290 | 0.020 | 0.0018 | W:2.00 |
| D | 0.019 | 0.14 | 0.44 | 0.022 | 0.002 | 25.01 | 6.90 | 3.06 | 0.06 | 0.29 | 0.292 | 0.028 | 0.0021 | W: 1.98 |
| E | 0.020 | 0.16 | 0.48 | 0.023 | 0.001 | 24.89 | 6.00 | 1.01 | 0.04 | 0.19 | 0.210 | 0.012 | 0.0025 | Cu: 1.91 |
| F | 0.020 | 0.16 | 0.49 | 0.022 | 0.002 | 24.89 | 4.02 | 1.00 | 0.05 | 0.24 | 0.214 | 0.016 | 0.0028 | Cu: 1.93 |
| G | 0.020 | 0.13 | 0.53 | 0.022 | 0.001 | 28.93 | 4.99 | 1.00 | 0.05 | 0.17 | 0.386 | 0.016 | 0.0017 | Cu: 1.92 |
| H | 0.020 | 0.13 | 0.63 | 0.023 | 0.001 | 27.95 | 6.00 | 1.00 | 0.04 | 0.21 | 0.380 | 0.016 | 0.0020 | Cu: 1.48 |
| I | 0.017 | 0.14 | 0.62 | 0.019 | 0.002 | 26.01 | 4.98 | 1.01 | 0.04 | 0.26 | 0.212 | 0.016 | 0.0018 | Sn: 0.005 |
| J | 0.020 | 0.15 | 0.55 | 0.018 | 0.004 | 28.40 | 5.08 | 1.01 | 0.06 | 0.18 | 0.381 | 0.020 | 0.0018 | REM: 0.040 |
| K | 0.019 | 0.17 | 0.51 | 0.019 | 0.001 | 29.04 | 6.02 | 0.99 | 0.06 | 0.19 | 0.391 | 0.009 | 0.0022 | Ca: 0.0014 |
| L | 0.019 | 0.12 | 0.51 | 0.019 | 0.002 | 26.85 | 4.91 | 0.81 | 0.03 | 0.19 | 0.331 | 0.009 | 0.0024 | Mg: 0.0008 |
| M | 0.019 | 0.14 | 0.48 | 0.021 | 0.001 | 22.01 | 6.02 | 2.96 | 0.04 | 0.18 | 0.192 | 0.009 | 0.0017 | Nb: 0.050 |
| N | 0.020 | 0.15 | 0.46 | 0.022 | 0.001 | 22.08 | 4.13 | 2.99 | 0.08 | 0.19 | 0.196 | 0.012 | 0.0025 | Ti: 0.060 |
| O | 0.018 | 0.14 | 0.49 | 0.021 | 0.001 | 22.09 | 6.11 | 2.91 | 0.04 | 0.18 | 0.204 | 0.009 | 0.0020 | Zr: 0.030 |
| P | 0.019 | 0.20 | 0.68 | 0.023 | 0.001 | 28.40 | 5.10 | 1.08 | 0.06 | 0.21 | 0.380 | 0.016 | 0.0020 | Cu: 1.54, Sn: 0.002 |
| Q | 0.019 | 0.18 | 0.68 | 0.023 | 0.001 | 28.60 | 5.10 | 0.99 | 0.06 | 0.21 | 0.386 | 0.016 | 0.0020 | Cu: 1.48, REM: 0.060 |
| R | 0.018 | 0.14 | 0.48 | 0.028 | 0.001 | 26.90 | 4.91 | 0.81 | 0.04 | 0.21 | 0.344 | 0.012 | 0.0015 | Cu: 1.47, Ca: 0.0020 |
| S | 0.021 | 0.13 | 0.49 | 0.023 | 0.001 | 27.01 | 4.84 | 0.79 | 0.04 | 0.21 | 0.323 | 0.014 | 0.0016 | Cu: 1.48, Mg: 0.0013 |
| T | 0.019 | 0.17 | 0.50 | 0.024 | 0.001 | 22.09 | 3.01 | 2.97 | 0.06 | 0.18 | 0.187 | 0.010 | 0.0022 | - |
| U | 0.021 | 0.16 | 0.44 | 0.024 | 0.001 | 25.03 | 3.84 | 3.04 | 0.07 | 0.40 | 0.288 | 0.019 | 0.0022 | W: 2.02 |
| V | 0.019 | 0.15 | 0.47 | 0.021 | 0.001 | 26.08 | 3.02 | 0.98 | 0.06 | 0.22 | 0.193 | 0.018 | 0.0020 | Cu: 2.01 |
| W | 0.015 | 0.11 | 1.00 | 0.022 | 0.001 | 27.04 | 3.51 | 1.00 | 0.11 | 0.18 | 0.376 | 0.012 | 0.0011 | Cu: 1.51 |

(continued)

| Steel Desig. | Chemical com position (in mass %, balance Fe and impurities) | | | | | | | | | | | | | |
| --- | --- | --- | --- | --- | --- | --- | --- | --- | --- | --- | --- | --- | --- | --- |
| | C | Si | Mn | P | S | Cr | Ni | Mo | V | Co | N | Al | B | Others |
| X | 0.019 | 0.14 | 0.51 | 0.020 | 0.001 | 27.91 | 4.97 | 1.01 | 0.30 | 0.28 | 0.381 | 0.016 | 0.0019 | - |
| Y | 0.020 | 0.14 | 0.49 | 0.022 | 0.001 | 27.89 | 4.99 | 0.99 | 0.01 | 0.24 | 0.378 | 0.016 | 0.0020 | - |
| Z | 0.020 | 0.13 | 0.53 | 0.028 | 0.001 | **27.96** | 6.00 | 1.00 | 0.26 | 0.20 | 0.380 | 0.016 | 0.0020 | Cu: 1.39 |
| AA | 0.018 | 0.16 | 0.48 | 0.026 | 0.001 | 27.91 | 5.02 | 0.98 | 0.01 | 0.19 | 0.378 | 0.016 | 0.0018 | Cu: 0.89 |
| AB | 0.018 | 0.11 | 0.49 | 0.024 | 0.001 | 28.44 | 6.02 | 1.01 | 0.09 | 0.90 | 0.390 | 0.020 | 0.0011 | - |
| AC | 0.018 | 0.13 | 0.52 | 0.022 | 0.001 | 28.49 | 4.99 | 0.99 | 0.09 | 0.01 | 0.386 | 0.018 | 0.0018 | - |
| AD | 0.017 | 0.13 | 0.48 | 0.020 | 0.001 | 28.64 | 6.13 | 0.97 | 0.11 | 0.60 | 0.391 | 0.016 | 0.0015 | Cu: 2.10 |
| AE | 0.017 | 0.14 | 0.51 | 0.021 | 0.001 | 28.46 | 5.11 | 0.96 | 0.09 | 0.02 | 0.335 | 0.017 | 0.0010 | Cu: 2.08 |
| AF | 0.021 | 0.15 | 0.44 | 0.024 | 0.001 | 26.03 | 10.62 | 3.97 | 0.07 | 0.40 | 0.220 | 0.019 | 0.0022 | - |

[Table 2]

TABLE 2

| Chemical composition of welding material (in mass %, balance Fe and impurities) | | | | | | | | | | | | | | |
|---|---|---|---|---|---|---|---|---|---|---|---|---|---|
| C | Si | Mn | P | S | Cr | Ni | Mo | V | Co | N Co | Al | B | W | |
| 0.022 | 0.24 | 0.61 | 0.021 | 0.001 | 24.78 | 9.20 | 3.00 | - | - | 0.010 | 0.009 | - | 1.98 | |

Each duplex stainless steel for base material was casted and then heated to 1200 °C, and forged into a plate with a thickness of 40 mm. The resulting plate was heated to 1250 °C and rolled into a steel sheet with a thickness of 15 mm. The relevant processing time for hot rolling is as shown in Table 3, provided further below.

The resulting steel plate was subjected to solution heat treatment. Specifically, the steel sheet was heated at the relevant solution heat treatment temperature shown in Table 3 below for 30 minutes and, thereafter, water cooled to produce a sample steel plate.

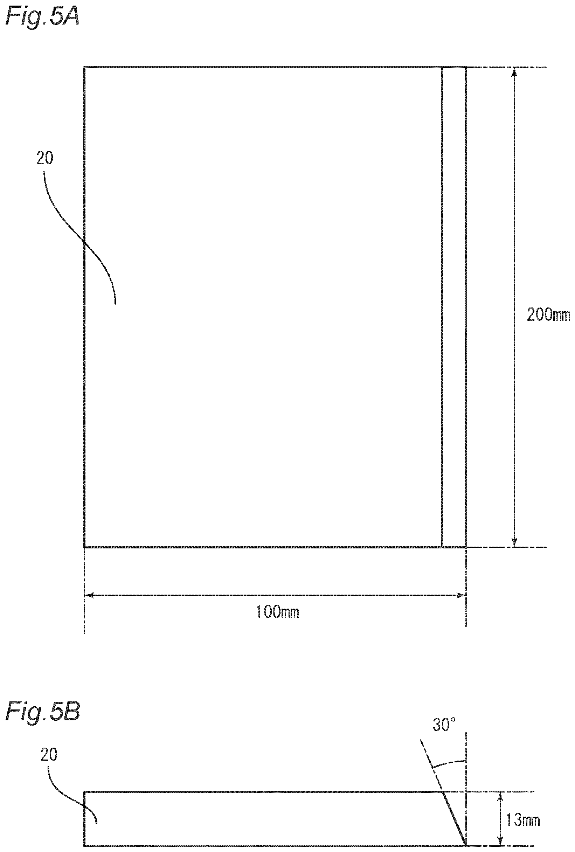

The sample steel plate was machined to prepare a test specimen 20, shown in FIGS. 5A and 5B. FIG. 5Ais a plan view of the test specimen 20, and FIG. 5B is a front view of the specimen. The test specimen 20 had a thickness of 13 mm, a width of 100 mm and a length of 200 mm, the specimen having a V-groove at the edge of a long side with a bevel angle of 30° (i.e., groove angle of 60°).

The duplex stainless steel for welding material was forged and then heated to 1200 °C, and forged into a rod with a diameter of 30 mm. The resulting rod was hot rolled at 1250 °C, and then cold rolled to produce wire for welding with a diameter of 1.6 mm.

Test specimens with the same steel designation and having been subjected to the same solution heat treatment were brought into contact at their ends, and multi-layer welding was performed using the wire for welding, by TIG welding starting at one end, to prepare a weld joint. The shielding gas used was pure Ar. The welding heat input was 6 kJ/cm for Test No. 10, and 15 kJ/cm for the other test specimens.

[Tensile Testing of Base Material Portion]

For each test number, a round-bar tensile test piece was taken from the base material portion (i.e., sample steel plate) of the weld joint. The parallel portion of the round-bar tensile test piece had a diameter of 4 mm and a length of 20 mm. The longitudinal direction of the round-bar tensile test piece was perpendicular to the direction of rolling of the sample steel plate. Tensile testing was conducted on the round-bar tensile test piece at room temperature (i.e., at 25 °C) to measure yield strength. The proof strength of 0.2 % was treated as the yield strength.

[Evaluation of Microstructure]

The volume ratio of ferrite phase in the base material portion (i.e., sample steel plate), the volume ratio of ferrite phase in the weld heat-affected zone, and the austenite-phase inter-part distance $\lambda$ in the weld heat-affected zone were measured in accordance with the method described in connection with the embodiments.

[HISC Testing of Weld Heat-Affected Zone]

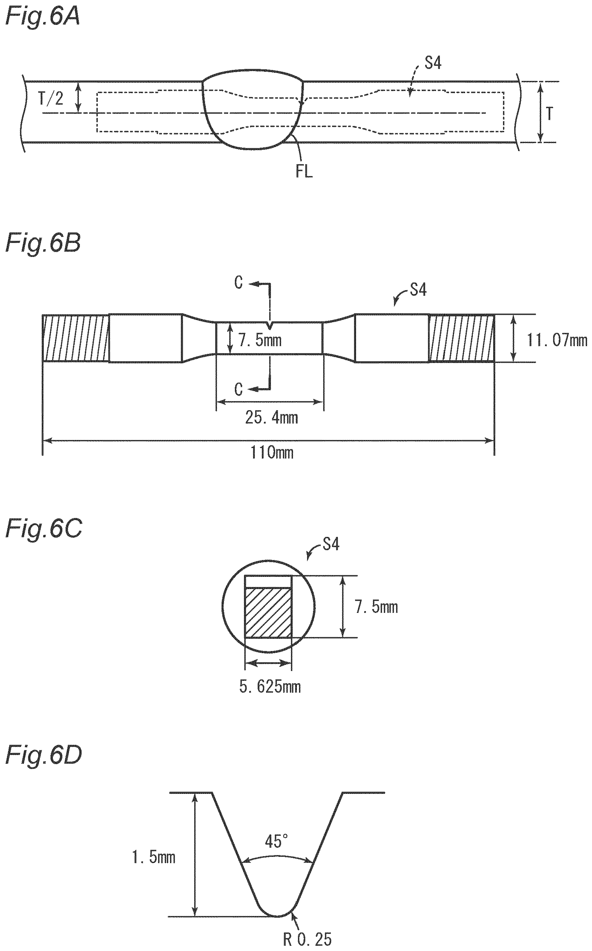

A V-notch corrosion test piece S4 was taken from each of the weld joints obtained, where the longitudinal direction of the test piece was perpendicular to the weld line, the parallel portion had a size of 7.5 mm $\times$ 5.625 mm (rectangular cross section), the length of the parallel portion was 25.4 mm, and the notch depth was 1.5 mm. FIG. 6A illustrates the location from which the corrosion resistance test piece S4 was taken; FIG. 6B is a front view of the corrosion test piece S4; FIG. 6C shows a cross section of the corrosion test piece S4 taken along line C-C of FIG. 6B; and FIG. 6D shows an enlarged view of the V-notch. As shown in FIG. 6A, the corrosion test piece S4 was taken in such a manner that the tip of the V-notch was on the fusion line FL. Cathodic protection testing was conducted on this corrosion test piece S4 in the following manner.

A test potential of -1.1 V (vs. SCE) was applied to each corrosion test piece S4 at 80 °C for 30 days, and then the temperature was lowered to 4 °C and a tensile stress was applied in the longitudinal direction for 14 days. After completion of testing, the corrosion test piece S4 was evaluated for the presence/absence of cracking in the notched portion. The tensile stress applied was a stress of 98 % of the 0.2 % proof strength of the sample. The test solution used was a 3.5 mass % NaCl aqueous solution. In the evaluation, a test piece that did not break was classified as "P", and a test piece that broke as "F".

[Toughness Testing of Weld Heat-Affected Zone]

A full-sized V-notch test piece was taken in accordance with the method described in connection with the embodiments, where the test piece had a width of 10 mm, a thickness of 10 mm, a length of 55 mm, and a notch depth of 2 mm, and Charpy impact testing was conducted at -30 °C to determine the amount of absorbed energy. In the evaluation, a test piece with an absorbed energy not smaller than 30 J was determined to have good toughness.
The results are shown in Table 3.

[Table 3]

TABLE 3

| Test No. | Steel desig. | Process conditions | | | Base material portion | | Weld heat-affected zone | | HISC resistance test | Toughness test of weld heat-affected zone |
|---|---|---|---|---|---|---|---|---|---|---|
| | | Hot working time (min) | Solution heat treatment temp. (°C) | Δt (see) | Y8 (MPa) | Ferrite volume fraction (%) | Ferrite volume fraction (%) | λ | | |
| 1 | A | 10 | 1050 | ○ | 473 | 50 | 54 | ≤ 60 μm | P | ≥ 30 J |
| 2 | B | 13 | 1050 | ○ | 491 | 63 | 68 | ≤ 60 μm | P | ≥ 30 J |
| 3 | C | 9 | 1100 | ○ | 608 | 48 | 52 | ≤ 60 μm | P | ≥ 30 J |
| 4 | D | 13 | 1150 | ○ | 622 | 55 | 61 | ≤ 60 μm | P | ≥ 30 J |
| 5 | E | 14 | 950 | ○ | 494 | 51 | 55 | ≤ 60 μm | P | ≥ 30 J |
| 6 | F | 10 | 1080 | O | 527 | 57 | 63 | ≤ 60 μm | P | ≥ 30 J |
| 7 | G | 10 | 1080 | O | 641 | 43 | 49 | ≤ 60 μm | P | ≥ 30 J |
| 8 | H | 10 | 1080 | O | 614 | 40 | 45 | ≤ 60 μm | P | ≥ 30 J |
| 9 | I | 15 | 950 | O | 460 | 47 | 53 | ≤ 60 μm | P | ≥ 30 J |
| 10 | I | 10 | 1080 | 6 | 633 | 44 | 68 | > 60 μm | F | ≥ 30 J |
| 11 | J | 10 | 1080 | ○ | 608 | 44 | 52 | ≤ 60 μm | P | ≥ 30 J |
| 12 | K | 10 | 1080 | ○ | 605 | 45 | 52 | ≤ 60 μm | P | ≥ 30 J |
| 13 | L | 10 | 1080 | ○ | 583 | 41 | 47 | ≤ 60 μm | P | ≥ 30 J |

| Test No. | Steel desig. | Process conditions | | | Base material portion | | Weld heat-affected zone | | HISC resistance test | Toughness test of weld heat-affected zone |
|---|---|---|---|---|---|---|---|---|---|---|
| | | Hot working time (min) | Solution heat treatment temp. (°C) | Δt (see) | Y8 (MPa) | Ferrite volume fraction (%) | Ferrite volume fraction (%) | λ | | |
| 14 | M | 10 | 1050 | ○ | 508 | 47 | 56 | ≤ 60 μm | P | ≥ 30 J |
| 15 | N | 10 | 1050 | ○ | 533 | 60 | 69 | ≤ 60 μm | P | ≥ 30 J |
| 16 | O | 10 | 1050 | ○ | 501 | 50 | 56 | ≤ 60 μm | P | ≥ 30 J |
| 17 | P | 10 | 1080 | ○ | 633 | 44 | 50 | ≤ 60 μm | P | ≥ 30 J |
| 18 | Q | 10 | 1080 | ○ | 631 | 43 | 50 | ≤ 60 μm | P | ≥ 30 J |
| 19 | R | 8 | 1080 | ○ | 624 | 41 | 48 | ≤ 60 μm | P | ≥ 30 J |
| 20 | S | 10 | 1080 | ○ | 611 | 42 | 45 | ≤ 60 μm | P | ≥ 30 J |
| 21 | T | 10 | 1100 | ○ | 513 | 70 | 77 | > 60 μm | F | < 30 J |
| 22 | U | 10 | 1150 | ○ | 641 | 68 | 75 | > 60 μm | F | < 30 J |
| 23 | V | 10 | 1100 | ○ | 567 | 71 | 77 | > 60 μm | F | < 30 J |
| 24 | W | 9 | 1080 | ○ | 650 | 69 | 75 | > 60 μm | F | < 30 J |
| 25 | X | 13 | 1080 | ○ | 604 | 44 | 53 | - | - | < 30 J |
| 26 | Y | 13 | 1080 | ○ | 600 | 41 | 49 | > 60 μm | F | - |
| 27 | Z | 13 | 1080 | ○ | 628 | 42 | 47 | - | - | < 30 J |

EP 4 234 739 A1

| Test No. | Steel desig. | Process conditions | | | Base material portion | | Weld heat-affected zone | | HISC resistance test | Toughness test of weld heat-affected zone |
|---|---|---|---|---|---|---|---|---|---|---|
| | | Hot working time (min) | Solution heat treatment temp. (°C) | Δt (see) | Y8 (MPa) | Ferrite volume fraction (%) | Ferrite volume fraction (%) | λ | | |
| 28 | AA | 10 | 1080 | ○ | 615 | 40 | 44 | > 60 μm | F | - |
| 29 | AB | 7 | 1080 | ○ | 608 | 51 | 55 | - | - | < 30 J |
| 30 | AC | 7 | 1080 | ○ | 602 | 49 | 50 | > 60 μm | F | - |
| 31 | AD | 7 | 1080 | ○ | 644 | 46 | 50 | - | - | < 30 J |
| 32 | AE | 5 | 1080 | ○ | 633 | 43 | 50 | > 60 μm | F | - |
| 33 | AF | 14 | 1080 | ○ | 611 | 39 | 43 | ≤ 60 μm | P | < 30 J |
| 34 | A | 120 | 1050 | ○ | 482 | 71 | 76 | > 60 μm | F | < 30 J |
| 35 | B | 30 | 1050 | ○ | 495 | 71 | 78 | > 60 μm | F | < 30 J |

"O" indicates Δt = 8 to 50 sec
*"_" indicates that no evaluation was made.
*P: passed; F: failed

EP 4 234 739 A1

Each of the weld joints labeled with Test Nos. 1 to 9 and 11 to 20 developed no HISC and had good toughness.

The weld joint with Test No. 10 developed HISC. This is presumably because the cooling time $\Delta t$ in the range of 1000 to 700 °C in the weld thermal cycle was too short, leading to insufficient production of austenite phase in the weld heat-affected zone.

Each of the weld joints with Test Nos. 21 to 24 (steel designations T, U, V and W) developed HISC. This is presumably because the Ni content in the base material was too low

Each of the weld joints with Test Nos. 25 and 27 (steel designations X and Z) had low toughness. This is presumably because the V content in the base material was too high.

Each of the weld joints with Test Nos. 26 and 28 (steel designations Y and AA) developed HISC. This is presumably because of the large austenite-phase inter-part distance $\lambda$ in the microstructure of the weld heat-affected zone. The austenite-phase inter-part distance $\lambda$ was large presumably because the V content in the base material was too low.

Each of the weld joints with Test Nos. 29 and 31 (steel designations AB and AD) had low toughness. This is presumably because the Co content in the base material was too high.

Each of the weld joints with Test Nos. 30 and 32 (steel designations AC and AE) developed HISC. This is presumably because of the large austenite-phase inter-part distance $\lambda$ in the microstructure of the weld heat-affected zone. The austenite-phase inter-part distance $\lambda$ was large presumably because the Co content in the base material was too low.

The weld joint with Test No. 33 (steel designation AF) had low toughness. This is presumably because the Ni content in the base material was too high such that sigma-phase precipitated. It would be possible to reduce the austenite-phase inter-part distance $\lambda$ by increasing Ni content, as was the case with Test No. 33; however, both achieving this and preventing precipitation of sigma-phase would be difficult.

Each of the weld joints with Test Nos. 34 and 35 developed HISC. This is presumably because the time for hot working was too long such that the volume ratio of ferrite phase in the base material was high, resulting in a high volume ratio of ferrite phase in the weld heat-affected zone. It is also assumed that the crystal grains coarsened, reducing toughness.

Although embodiments of the present invention have been described, the above-described embodiments are exemplary only, intended to allow the present invention to be carried out. Accordingly, the present invention is not limited to the above-described embodiments, and the above-described embodiments, when carried out, may be modified as appropriate without departing from the spirit of the invention.

REFERENCE SIGNS LIST

    10: weld joint
    11: base material portions
    12: weld portion
    121: weld metal portion
    122: weld heat-affected zones
    20: test specimen
    S1: macroscopic test piece
    S2: microscopic test piece
    S3: Charpy impact test piece
    S4: corrosion test piece
    FL: fusion line
    T: thickness
    N: notch
    Lx: straight lines
    $Lx_1$, $Lx_2$, ..., $L_{X15}$: line segments
    Ly: straight lines
    $L_{y1}$, $Ly_2$, ..., $L_{Y15}$: line segments

**Claims**

**1.** A duplex stainless steel weld joint comprising a base material portion and a weld portion,

the weld portion including a weld metal portion and a weld heat-affected zone,
the base material portion having a chemical composition of, in mass %:

up to 0.040 % C;
up to 0.90 % Si;
0.20 to 1.50 % Mn;
up to 0.040 % P;
up to 0.010 % S;
not less than 21.00 % and less than 31.00 % Cr;
4.00 to 8.00 % Ni;
0.50 to 4.00 % Mo;
0.03 to 0.20 % V;
0.05 to 0.50 % Co;
above 0.100 % and up to 0.500 % N;
up to 0.040 % Al;
0.0005 to 0.0040 % B;
0 to 4.00 % W;
0 to 4.00 % Cu;
0 to 0.100 % Sn;
0 to 0.200 % REM;
0 to 0.0040 % Ca;
0 to 0.0040 % Mg;
0 to 0.100 % Nb;
0 to 0.100 % Ti;
0 to 0.100 % Zr; and

the balance Fe and impurities,
the weld metal portion having a chemical composition in the same ranges as the chemical composition of the base material portion except for Ni, V, Co and B, the weld metal portion having, for Ni, V, Co and B, a chemical composition of, in mass %:

5.00 to 10.50 % Ni;
0 to 0.20 % V;
0 to 0.50 % Co; and
0 to 0.0040 % B,

the weld heat-affected zone having a two-phase microstructure of ferrite and austenite, a volume ratio of ferrite phase being not higher than 70 %, an austenite-phase inter-part distance $\lambda$ being not larger than 60 pm,
where the austenite-phase inter-part distance $\lambda$ in the weld heat-affected zone is measured in the following manner:

a cross section perpendicular to a weld line is specified; a width direction is defined as a direction perpendicular to a thickness direction of the base material portion, and a height direction is defined as the thickness direction of the base material portion; a region adjacent to a fusion line is specified, the region being 84 pm in the width direction and 199.5 pm in the height direction;
20 straight lines are drawn in the width direction separated from one another by a distance of 10.5 pm, each line having a length of 84 pm; a line segment is extracted from the 20 straight lines, the line segment being on ferrite phase and connecting boundaries against austenite phase; a total length of the extracted line segment is divided by the number of the line segment to give an average distance in the width direction;
9 straight lines are drawn in the height direction separated from one another by a distance of 10.5 pm, each straight line having a length of 199.5 pm; a line segment is extracted from the 9 straight lines, the line segment being on ferrite phase and connecting boundaries against austenite phase, a total length of the extracted line segment is divided by the number of the line segment to give an average distance in the height direction; and
an average of the average distance in the width direction and the average distance in the height direction is determined to give the austenite-phase inter-part distance $\lambda$.

2. The duplex stainless steel weld joint according to claim 1, wherein the chemical composition of at least one of the base material portion and the weld metal portion includes at least one element selected from the group consisting of, in mass %:

0.50 to 4.00 % W;
0.20 to 4.00 % Cu; and
0.001 to 0.100 % Sn.

3. The duplex stainless steel weld joint according to claim 1 or 2,
   wherein the chemical composition of at least one of the base material portion and the weld metal portion includes at least one element selected from the group consisting of, in mass %:

   0.001 to 0.200 % REM;
   0.0005 to 0.0040 % Ca; and
   0.0005 to 0.0040 % Mg.

4. The duplex stainless steel weld joint according to any one of claims 1 to 3, where the chemical composition of at least one of the base material portion and the weld metal portion includes at least one element selected from the group consisting of, in mass %:

   0.001 to 0.100 % Nb;
   0.001 to 0.100 % Ti; and
   0.001 to 0.100 % Zr.

Fig.1

Fig.2A

Fig.2B

*Fig.3A*

*Fig.3B*

Height direction

Width direction

199.5μm

10.5μm

84μm

Fig.4

Fig.5A

20

200mm

100mm

Fig.5B

20

30°

13mm

*Fig.6A*

*Fig.6B*

*Fig.6C*

*Fig.6D*

# EP 4 234 739 A1

<table>
<tr><td colspan="2" style="text-align:center">INTERNATIONAL SEARCH REPORT</td><td>International application No.<br>**PCT/JP2021/027339**</td></tr>
</table>

**A. CLASSIFICATION OF SUBJECT MATTER**

*C22C 38/00*(2006.01)i; *C22C 38/58*(2006.01)i; *B23K 35/30*(2006.01)i
FI: C22C38/00 302H; C22C38/58; B23K35/30 320B

According to International Patent Classification (IPC) or to both national classification and IPC

**B. FIELDS SEARCHED**

Minimum documentation searched (classification system followed by classification symbols)

C22C38/00; B23K35/30; C22C38/58

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-135601 A (KOBE STEEL LTD.) 30 August 2018 (2018-08-30) | 1-4 |
| A | JP 2020-509201 A (SANDVIK INTELLECTUAL PROPERTY AB) 26 March 2020 (2020-03-26) | 1-4 |
| A | JP 2016-78060 A (NIPPON STEEL & SUMIKIN STAINLESS STEEL CORP.) 16 May 2016 (2016-05-16) | 1-4 |
| A | JP 2010-194562 A (HITACHI PLANT TECHNOLOGIES LTD.) 09 September 2010 (2010-09-09) | 1-4 |
| A | WO 2020/138490 A1 (NIPPON STEEL STAINLESS STEEL CORP.) 02 July 2020 (2020-07-02) | 1-4 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**29 September 2021** | Date of mailing of the international search report<br><br>**12 October 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2021/027339**

| Patent document cited in search report | | | Publication date (day/month/year) | Patent family member(s) | | | Publication date (day/month/year) |
|---|---|---|---|---|---|---|---|
| JP | 2018-135601 | A | 30 August 2018 | (Family: none) | | | |
| JP | 2020-509201 | A | 26 March 2020 | US | 2019/0376156 | A1 | |
| | | | | WO | 2018/114867 | A1 | |
| | | | | EP | 3559282 | A1 | |
| | | | | CA | 3045542 | A1 | |
| | | | | CN | 110088305 | A | |
| | | | | KR | 10-2019-0099232 | A | |
| JP | 2016-78060 | A | 16 May 2016 | (Family: none) | | | |
| JP | 2010-194562 | A | 09 September 2010 | (Family: none) | | | |
| WO | 2020/138490 | A1 | 02 July 2020 | (Family: none) | | | |

Form PCT/ISA/210 (patent family annex) (January 2015)

**REFERENCES CITED IN THE DESCRIPTION**

**Patent documents cited in the description**

- JP HEI51993132741 A
- WO 2005001151 A1
- JP 2013253315 A
- JP HEI81996260101 A